# EUROPEAN PATENT SPECIFICATION

(11) **EP 3 305 601 B1**
(45) Date of publication and mention of the grant of the patent: **05.06.2019**
(21) Application number: 16192383.4
(22) Date of filing: 05.10.2016
(51) Int. Cl.: B60R 9/06, B62D 43/02, B60R 9/10

(54) **LOAD CARRIER**
LASTENTRÄGER
SUPPORT DE CHARGE

(43) Date of publication of application: 11.04.2018
(73) Proprietor: Van 'n Bike BVBA, 2980 Zoersel (BE)
(72) Inventor: Verelst, René, 2980 Zoersel (BE)
(74) Representative: IP HILLS NV

(56) References cited:
- EP-B1- 2 774 816
- DE-A1- 19 535 006
- DE-U1- 29 801 417
- DE-U1-202012 003 932
- US-A- 4 381 069
- US-A1- 2004 222 261
- US-A1- 2009 085 325

## Description

### Field of the Invention

The present invention generally relates to the field of load carriers for vehicles. More particularly it relates to load carriers for vans having two rear doors opening sideways in opposite directions.

### Background of the Invention

A common problem with load carriers for vans is that they can block the opening of the rear doors. Therefore manufacturers typically offer solutions that allow the rear doors to open. A common problem with these flexible solutions is that the strength of the load carrier must be high enough, that the forces on the vehicle by the extra weight may not be excessive, that road safety regulations must be met, especially in terms of lightning, that the carrier must be easily accessible for the user and that the carrier is easily mountable on a variety of vehicle types.

EP2774816B1 discloses a bike carrier that is mountable on a two door van. The carrier comprises a supporting frame that is fixed on the upper hinges of the respective doors and on top of the body frame. The fixture on top further comprises the braking light. The carrier further comprises a carrier frame which is rotatable mounted on the lowest door hinge and on the supporting frame. When the carrier frame is opened, the rear doors of the van can also open because the supporting frame runs above the rear doors. In order to make the rear lightning of the van visible, the bicycle frame can slide upwards on the carrier frame by a lifting mechanism.

A problem with the above solution is that it is very heave because of the supporting frame and the lifting mechanism thereby putting a lot of strain on the van itself. Another problem is that a lot strain is put on the upper portion of the van because of the high mounting position of the bike and the carrier. A further problem is that the carrier is not universally applicable because of the connection between the hinges and the upper rear light by the mounting frame, therefore, different versions must be foreseen. Furthermore, when bikes are mounted, the rear visibility through the rear windows is obstructed by the bikes.

DE19535006A1 discloses a rear bike carrier that is mountable on a two door van. The carrier can be attached to the doors of the van at the position where the hinges are fixed to the doors. When driving the vehicle, the rear carrier must further be tightened by elastic support elements and by an adjustable band which is fixed to the top of the van.

A disadvantage of the above solution is that the carrier puts a lot of strains on the rear doors, especially when the doors are opened because both the weight of the carrier and the doors must be carried by the door hinges. A further disadvantage is that the removal of the band to open the doors is difficult because the user must reach to the top of the van.

Another solution is the bike carrier from Biketrans as published on their website http://www.biketrans.nl. In one embodiment, a carrier frame is rotatably connected to the vehicle at the upper hinges and at a supporting bar which is mounted underneath the rear bumper. The carrier further comprises a bike lift for moving the bikes upwards in order to make the vehicles' rear lights visible.

A disadvantage of this carrier is that a lot strain is put on the upper portion of the van because of the high mounting position of the bike and the carrier. Another disadvantage is that the carrier's dimensions depend on the position of the hinges and on the position of the rear bumper. A further disadvantage is that the supporting bar is close to the ground and decreases the ground clearance of the vehicle. Because of this, the supporting bar may touch the ground when moving on an uneven terrain. Furthermore, the carrier is very heavy because of the supporting bar and the lifting mechanism thereby putting a lot of strain on the van itself.

DE29801417 (U1) discloses a carrier for attachment to the rear of a motor vehicle according to the preamble of claim 1. A side rail of the carrier is fixed, in the upper and lower region of the rear of the vehicle next to a door, lid and / or a window of the vehicle. The carrier is further pivotably mounted on the body and it has hinges such that the carrier rotates to a position in which the luggage carrier extends transversely to the rear of the motor vehicle.

DE202012003932 discloses a rear load carrier for a van for transporting bicycles. The rear load carrier has a support frame attachable to the hinges of the van and arranged thereon preferably five bicycle gutters together with supporting tubes and a positioning bracket.

US2004222261 (A1) discloses an exterior-mounted spare wheel carrier for a vehicle. The carrier is capable of rotating about a substantially horizontal axis and a substantially vertical axis to allow the spare wheel to be lowered to a position proximate the ground to facilitate the changing of a vehicle's wheel. The spare wheel carrier is releasably secured in a substantially horizontal plane by a tension member. The rotation of spare wheel carrier about a substantially vertical axis is governed by a governing mechanism. The spare wheel carrier is releasably held in a traveling position by an engaging mechanism and a safety latch.

### Summary of the Invention

It is an object of the present invention to overcome the above disadvantages and to provide a rear carrier that is easy to install, easy to use, light and does not put too much strain on the vehicle.

This object is achieved by the load carrier according to claim 1.

The load carrier is thus specifically suited for installation at the rear of a two door van with window-like opening doors. Such doors are attached to the vehicles body frame with at least two hinges. The carrier also comprises two hinges and the carrier frame can thus rotate separately from the doors. The hinges are attached at one side of the van, i.e., at the attachment points of one of the door's hinges. This way, the carrier frame can rotate from a closed position to an open position. In the closed position, the carrier frame is locked by the release lock to the lowest attachment point of the other door. The carrier frame is the part of the load carrier onto which the load can be fixed and which can rotate when the doors are opened. The hinges and release lock do thus directly interact with the rotatable carrier frame without further need for a supporting structure or bar.

It is an advantage that the carrier frame is supported by the lowest hinges of the two doors when in the closed position, because this results in less strain on the upper structure of the van's upper body frame. Furthermore, by the carrier frame, the two hinges and the release lock, a complete carrier solution is obtained without any need for a supporting bar or structure that needs to be installed on the vehicle. The lower attachment of the carrier frame to the vehicle thus results in a much simpler carrier solution with less parts and thus less weight than existing solutions. Furthermore, the geometry of the carrier is only dependent on the position of the hinges on the vehicle resulting in less different models of the carrier.

By combining the carrier frame with a tow bar, a user can combine the advantages of the rotatable carrier frame with the flexibility of a two bar, i.e., the user can add any existing tow bar based carrier utility to the load carrier. Furthermore as most tow bar based carrier add-ons already comprise rear lightning, there is no need to foresee rear lightning to the load carrier itself.

According to an embodiment, the load carrier further comprising rear light attachment means for attaching rear lightning.

As rear lightning can be attached to the carrier frame, there is no need for a special lifting device for lifting the load such that the rear lights would be freely visible. Furthermore, as the load can be kept low, the upper braking light of the vehicle remains visible thereby avoiding expensive and complex add-ons to keep the braking light visible.

According to an embodiment, the carrier frame is arranged such that, when the carrier is installed on the vehicle, the rear lights of the vehicle are not obstructed by the carrier.

This way, no additional rear lightning is needed. This is for example useful when load not as wide as the vehicle itself are transported.

Preferable, the first and second hinge and the release lock are configured such that they can be installed on the vehicle without altering the body work of the vehicle.

As the hinges and release lock are installed on the attachment points of the rear doors' hinges, the body work of vehicle can stay unmodified when installing the hinges of the load carrier. More particular, both the vehicle's and carrier's hinges can be fixed to the same holes or fixation point of the body work. It is thus an advantage that the load carrier can be removed from the vehicle without leaving an traces on the body work. Furthermore, weakening of the body work by for example drilling holes is avoided.

Advantageously, the first and second hinges are further arranged to be disassembled for removing the carrier frame from the vehicle. For example, the first and second hinges may each comprise a first and second hinge leaf, a pin insertable through a knuckle of the first and second hinge leaf, and a safety pin for holding the pin. The hinges can then be disassembled by removing the safety pin and pin.

When the load carrier is not used, it can be easily removed from the vehicle by just disassembling the two hinges and releasing the release lock. Furthermore, as the carrier frame is removed at the hinges, no further support bars are left on the vehicle that can obstruct the use of the vehicle. Furthermore, only one part of the hinge leafs is left on the vehicle at the attachment points.

Advantageously, the load carrier further comprises a gas spring arranged to rotate the carrier frame to an opened position when installed on the vehicle. This way, a smooth opening and closing of the carrier is assured.

More advantageously, the gas spring is a dampened gas spring arranged to dampen the rotation of the carrier frame when the carrier frame is near the opened position.

As the load carrier is attached to the side of the vehicle at the attachment points, the load carrier may put a lot of force on these points when brusquely swinging the frame to the opened position. Even the gas spring may still cause a lot of force on these attachment points. The use of a dampened gas spring will greatly reduce this forces as the load carriers rotation speed will be slowly reduced near the opened position.

According to an embodiment, the release lock further comprises a first part attachable to the first lower attachment point of the first door and a second part attached to the carrier frame; and wherein second part comprises one or more centring pins and the first part comprises one or more respective holes for receiving the centring pins when closing the load carrier.

It is an advantage to provide centring pins on the part that is attached to the frame, while the part on the bodywork does not comprise any parts sticking out. This way, the risk of damaging the door when opening it is greatly reduced.

Advantageously, the load carrier further comprises a locking pin for locking the release lock. The first and second part each comprise a hole for receiving the locking pin. This way, also the locking mechanism does not protrude from the pars installed on the vehicle thereby reducing the risk of damage when opening the door of the vehicle.

The load carrier may further comprise a covering element for inserting over the first part when the load carrier is not in use; the covering element being arranged such that it serves as a door stop. This way, the door is further protected from damage and is prevented from swinging open too far.

### Brief Description of the Drawings

Fig. 1 illustrates a load carrier according to an embodiment of the invention in a closed position when mounted on a vehicle; and
Fig. 2 illustrates a load carrier according to an embodiment of the invention in an open position when mounted on a vehicle; and
Fig. 3 illustrates the carrier frame of a load carrier according to an embodiment of the invention; and
Fig. 4 illustrates a detailed view of the upper hinge of a load carrier according to an embodiment of the invention; and
Fig. 5 illustrates a detailed view of the lower hinge of a load carrier according to an embodiment of the invention; and
Fig. 6 illustrates a load carrier according to an embodiment of the invention with a bike carrier mounted on top of it when mounted on a vehicle; and
Fig. 7 illustrates a load carrier according to an embodiment of the invention comprising rear lightning and cargo box; and
Fig. 8 illustrates a detailed view of the release lock of a load carrier according to an embodiment of the invention; and
Fig. 9 illustrates a stopping element according to an embodiment of the invention.

### Detailed Description of Embodiment(s)

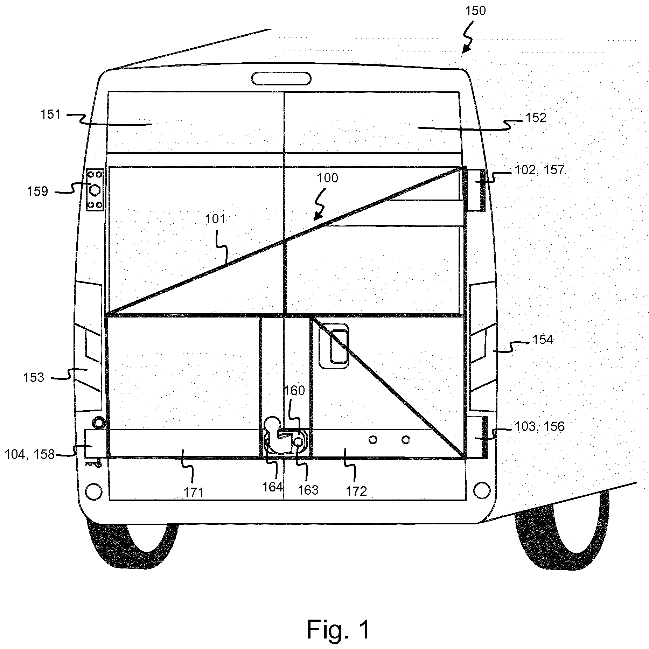

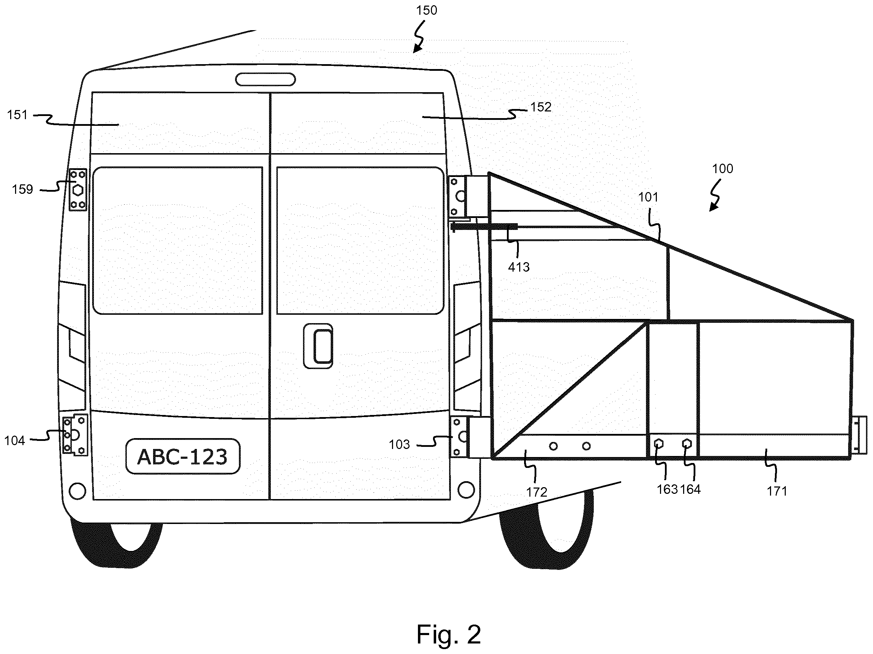

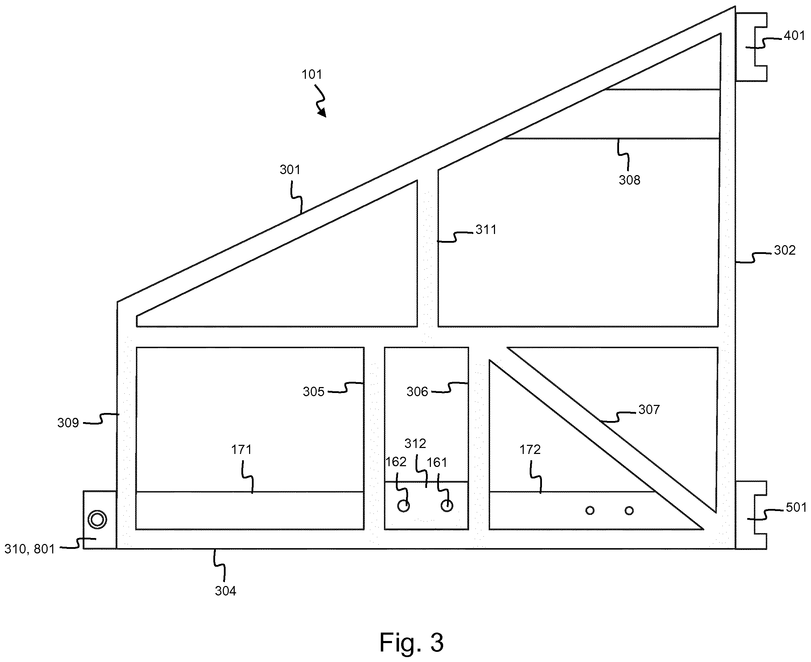

Fig. 1 and Fig. 2 illustrate a load carrier 100 according to an embodiment of the invention when mounted on a vehicle 150. Fig. 3 illustrates a detailed view of the load carrier frame 101 which is part of load carrier 100. The load carrier 100 is configured for a specific type of vehicles, i.e., for vehicles with barn door type rear doors 151, 152 with hinges 156-159. Barn type doors are typical for vans, mini-vans or campers. The left door 151 is mounted on the vehicle 150 by at least two hinges, an upper hinge 159 and a lower hinge 158. Similarly, the right door 152 is also mounted on the vehicle 150 by at least two hinges, an upper hinge 157 and lower hinge 156. All hinges 156-159 are mounted onto the vehicle at the upstanding outside border such that doors 151 and 152 have a barn door setup. Door hinges 156-159 each comprise two hinge leafs, a body hinge leaf and a door hinge leaf. The body hinge leafs are mounted on the bodywork of vehicle 150 by bolds screwed into the bodywork of the vehicle 150 thereby holding the body hinge leaf onto the vehicle. The positon at which the bolds are screwed into the bodywork is further referred to as attachment points. The door hinge leafs are then mounted onto the rear doors 151, 152.

The load carrier 100 is mounted onto the rear of the vehicle 150 at three of these attachment points, i.e., the load carrier 100 is fixed onto the vehicle 150 by the substantially the same means as hinges 156, 157 and 158. Load carrier 100 comprises two hinges 102 and 103 connected to the attachment points of the respective door hinges 157 and 156 on the one side and to the carrier frame 101 on the other side. By these hinges 156, 157, the load carrier may rotate from the closed position as illustrated in Fig. 1 to an open position as illustrated in Fig. 2. The angle of the load carrier in the open position with respect to the closed position may further be configurable, for example ranging from 90 up to 180 degrees. Load carrier 100 further comprises a release lock 158 for releasably attaching the carrier frame 101 to the vehicle 150 in the closed position. This closed position is used when the vehicle is driven. One part of release lock 104 is attached to the carrier frame 101 and a second part of release lock 104 is attached to the attachment point of the door hinge 158.

Load carrier 100 may further comprise a tow bar 160. When installed, the tow bar 160 is installed by bolds 163 and 164 into holes 161 and 162 provided in the carrier frame 101. The carrier frame may further comprise an electrical connection (not shown) for receiving a plug from an appliance which is installed on the tow bar 164. The electrical connection is then connected to the vehicle 150, for example along the frame 101 and the hinge 156 such that the carrier 100 is not hindered by the electrical connection when moving between the open and closed position.

The carrier frame 101 is made of interconnected metal tubes such that load attached to the carrier frame, either directly or by the tow bar 160 can be firmly attached. Frame 101 comprises a first upstanding tube 302 to which the hinge leafs 401 and 501 of the respective hinges 102 and 103 are unreleasably attached, for example by welding. Frame 101 comprises a second upstanding tube 309 to which one part 310 of the release lock 104 is unreleasably attached, for example by welding. The two upstanding tubes 302 and 309 are interconnected by a first lower horizontal tube 304, a second higher horizontal tube 303 and a diagonal tube 301. The interconnection is further enforced by vertical tubes 311, 305 and 306 and by diagonal tube 307. In order to reduce the potential torsion of the frame when it is not in the closed position and thus not supported by the release lock 104, the frame is reinforced with the bottom plates 171, 172, 312 and top plate 308. Plates 171 and 172 further serve as attachment means for adding rear lightning to the carrier frame 101. Plate 312 further comprises holes 161 and 162 for attaching a tow bar 160 by bolts 163 and 164.

Load carrier 100 may further comprise a gas spring 413 arranged to rotate the carrier frame 101 to the opened position when installed on the vehicle. The gas spring is preferable attached at the hinge leaf of hinge 102 which is attached to the bodywork of the vehicle 150 and to the plate 308. The gas spring is configured to aid the opening of the carrier frame 101 from the closed to the opened position. Advantageously, the gas spring 413 is further arranged to dampen the rotation of the carrier frame 101 when the carrier frame is near the opened position. This way, a brusque stopping of the carrier frame into the open position is avoided as this could potentially damage the bodywork near the attachment points.

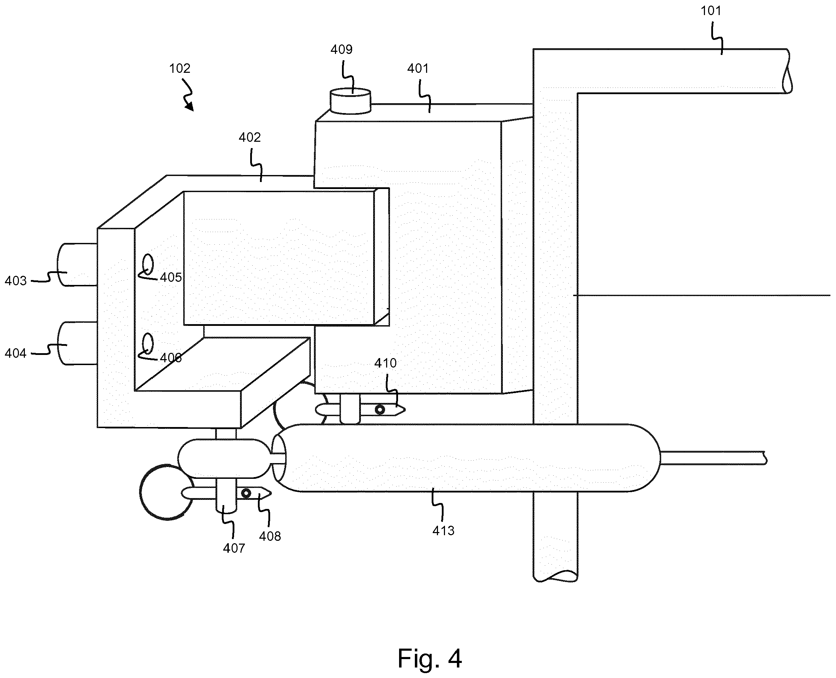

Fig. 4 shows a detailed view of the upper hinge 102 of load carrier 100. Hinge 102 comprises hinge leafs 401 and 402 forming a knuckle when joined together through which a pin 409 can be inserted. Pin 409 comprises a wider top portion such that the pin cannot fall through the knuckle. Pin 409 further comprises a hole near the bottom end. This bottom end sticks out of the knuckle when the pin 409 is inserted in the knuckle. A safety pin 410 fits through this hole such that the pin 409 is prevented from slipping out of the knuckle upwardly, for example due to vibrations of the vehicle 150.

Hinge leaf 401 is unreleasably attached to the carrier frame 101, for example by welding. Hinge leaf 402 is attachable to the bodywork of vehicle 150, more particularly by two bolds fitted through holes 405 and 406. Hinge leaf 402 is fitted on top of the vehicle's door hinge leaf of leaf 157. Prior to installation, the door hinge leafs outside bolts are first removed, then hinge leaf 402 is fitted on top of the door's hinge leaf with the distance elements 403 and 404. Then, longer bolts are fitted through holes 405 and 406 and through the door leaf into the bodywork of the vehicle 150 thereby holding both the door leaf and leaf 402 onto the vehicle 150.

At the bottom side, leaf 402 further comprises a cylindric element 407 with a hole drilled into it. This element 407 serves as attachment means for the gas spring 413. When the gas spring is fitted onto element 407, a safety pin 408 is insertable through the hole in order to keep the gas spring into place.

When installing the load carrier for the first time, hinge leaf 402 is attached to the bodywork of the vehicle 150 as described above. Thereafter, the load carrier can be removed temporarily by removing safety pins 408 and 410 and then removing pin 409 and the gas spring 413. For this, no special tools are needed, making the removal easy to perform in all circumstances.

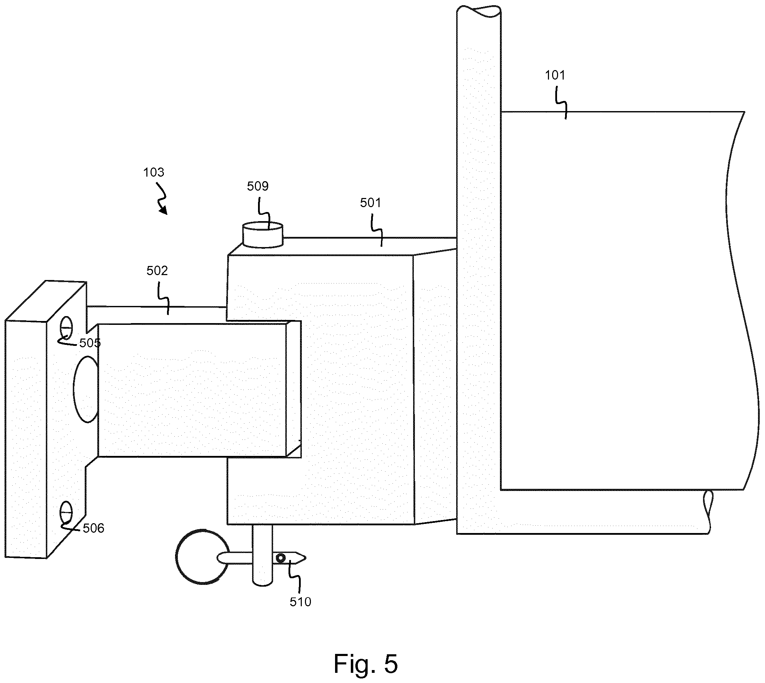

Fig. 5 shows a detail of the lower hinge 103 of load carrier 100. Hinge 103 comprises hinge leafs 501 and 502 forming a knuckle when joined together through which a pin 509 can be inserted. Pin 509 comprises a wider top portion such that the pin cannot fall through the knuckle. Pin 509 further comprises a hole near the bottom end. This bottom end sticks out of the knuckle when the pin 509 is inserted in the knuckle. A safety pin 510 fits through this hole such that the pin 509 is prevented from slipping out of the knuckle upwardly, for example due to vibrations of the vehicle 150.

Hinge leaf 501 is unreleasably attached to the carrier frame 101, for example by welding. Hinge leaf 502 is attachable to the bodywork of vehicle 150, more particularly by two bolds fitted through holes 505 and 506. Hinge leaf 502 is fitted on the vehicle's door bottom hinge leaf of leaf 156. Prior to installations, the door hinge leafs outside bolts are first removed, then hinge leaf 502 is fitted on top of the door's hinge leaf. Hinge leaf 501 does not need the distance elements 403 and 404 of leaf 401 due to the geometry of the bodywork. Then, longer bolts are fitted through holes 505 and 506 and through the door leaf into the bodywork of the vehicle 150 thereby holding both the door leaf and leaf 502 onto the vehicle 150.

When installing the load carrier for the first time, hinge leaf 502 is attached to the bodywork of the vehicle 150 as described above. Thereafter, the load carrier can be removed temporarily by removing safety pin 510 and then removing pin 509. For this, no special tools are needed, making the removal easy to perform in all circumstances.

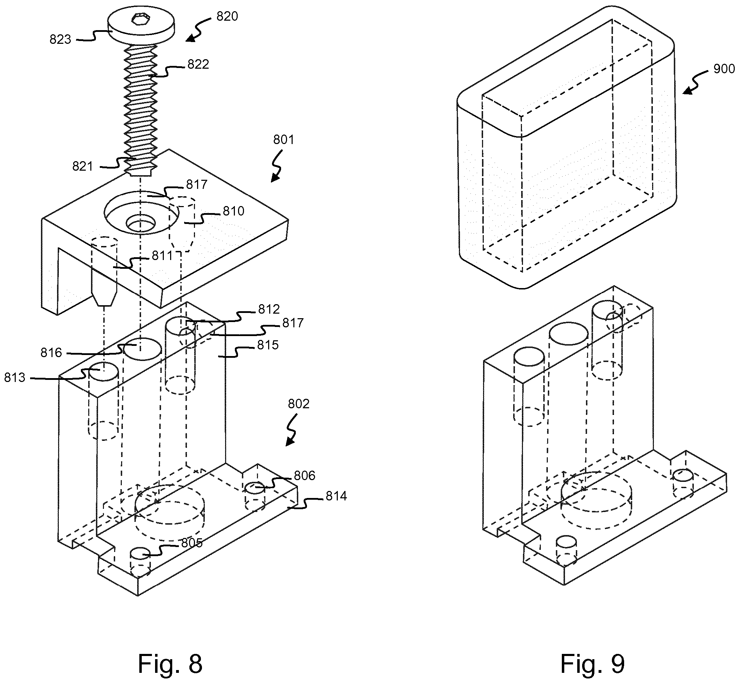

Fig. 8 shows a detailed view of the release lock 104 of the load carrier 100 according to an embodiment of the invention. Release lock 104 comprises a first part 801 permanently attachable to the carrier frame 101, for example by welding. Part 801 comprises two centring pins 810 and 811 conically shaped near the end. Part 801 further comprises an opening 817 for receiving locking pin 820. Release lock 104 further comprises a second part 802 attachable to the bodywork of the vehicle 150 at attachment point of the door hinge 158. More particular, part 802 comprises two holes 805 and 806 in a first flat portion 814. Bolts can then be inserted through holes 805 and 806, then through the holes of the body hinge leaf of hinge 158 into the bodywork of the vehicle 150. To do this, the original bolts have to be removed from the body hinge leaf of hinge 158 and replaced by longer bolts.

Part 802 further comprises a second portion 815 substantially perpendicular to first portion 814. When installed on the vehicle, second portion 815 will thus extend from the bodywork of the vehicle 150 towards the rear direction, i.e., portion 815 sticks out the rear end of the vehicle 150. Portion 815 further comprises two partial holes 812 and 813 and on through hole 816. Partial holes 812, 813 are also facing away from the rear end of the vehicle, such that they receive the centring pins 811 and 810 when putting the load carrier into the closed position. Because of the centring, small misalignments or movements of the carrier frame 101 with respect to the vehicle 150 can be compensated for. Through-hole 816 and hole 817 are arranged such that hole 817 aligns with through-hole 816 when the load carrier 100 is in the closed position. When closed, locking pin 820 is insertable through the opening 817 into the through-hole 816. Both the end of the through-hole 816 and locking pin 810 are threaded (see 821 for locking pin) such that, when the locking pin is inserted it can be further fastened by screwing the locking pin into the threaded portion of the through-hole. To ease the screwing action for the user, a handle 823 can be provided at the end of locking pin 820. The handle may be further securable by a locking system (not shown in the figure) provided in the handle. When locked, the handle 823 will not rotate the pin 822. When unlocked, the handle 823 will engage with pin 822 and thus rotate pin 822 upon rotation of the handle 823. By the locking pin 820, the load carrier 100 can thus be releasably attached to the vehicle 150 into the closed position. Part 802 may further comprise an opening 817 arranged to receive a safety pin for locking the centring pin 810 into opening 812.

Fig. 9 further illustrates a stopping element 900. The stopping element 900 is insertable over the part 802, for example when the load carrier is not in use. Stopping element 900 may be made from a suitable material for protecting and stopping the door when opened such as for example from rubber or plastics. A similar stopping element may further be provided for hinge leafs 502 and 402 (not shown in figures).

Load carrier 100 is thus attached to the vehicle 150 at only the three attachment points of the vehicle's hinges 156, 157 and 158. The load carrier can be partially removed from the vehicle by disassembling the hinges 102 and 103 as described above and by opening the release lock 104. This way, the frame 101 as shown in Fig. 3 can be removed from the vehicle. When the frame 101 is removed no further supporting frames or tubes are left on the vehicle. For the removal, no special tools are needed. As the carrier frame is positioned on the lower side of the vehicle 150, i.e., beneath the highest hinges, the load carrier 100 nor possible load will obstruct the upper rear braking light or block the rear view of the driver.

Advantageously, when the frame 101 is removed, protection pieces may be placed on the parts of the load carrier that are left on the vehicle 150, i.e., on leaf 402, leaf 502 and the part of the release lock that stays on the vehicle. Such protection may for example be made of rubber. This way, when the vehicle's doors are opened, the opening angle will be limited by the protection pieces such that damage to the doors is avoided.

A single load carrier according to the above embodiments can be installed on a wide range of vehicles, for example vehicles from Fiat, Peugeot and Citroen that all use same type of hinges and placement.

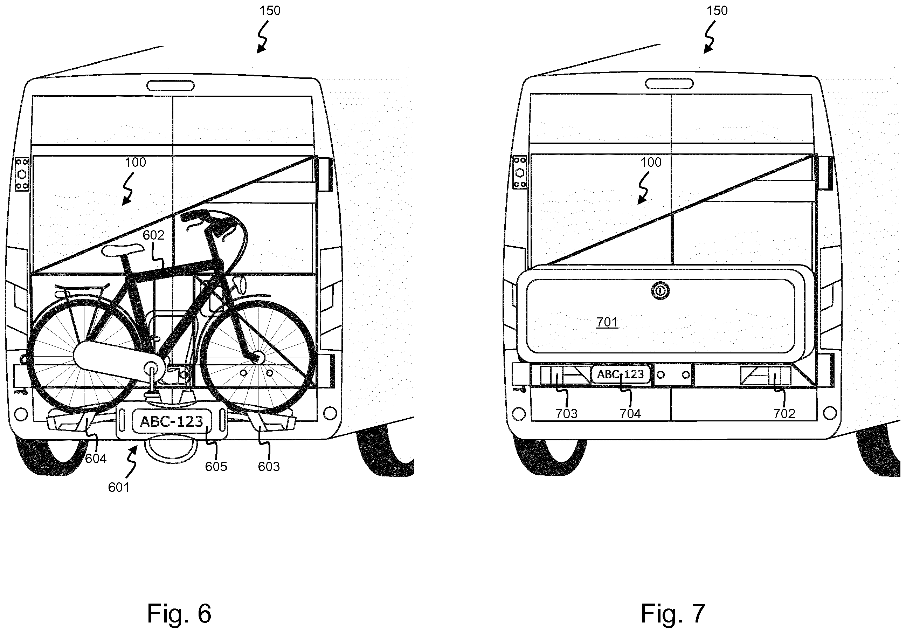

Fig. 6 illustrates the use of load carrier 100 according to an embodiment of the invention. In this case, the load carrier 100 comprises the tow bar 160. A bike carrier 601 with respective bike 602 is then fitted onto the tow bar 160. The bike carrier 601 further comprises rear light units 603 and 604 and license plate holder 605. Because of this, no further arrangements are needed on the load carrier 100 for lights or license plate. Instead of a bike carrier 601 also other load carrier appliances designed to be fitted on a tow bar 106 may be used in conjunction with load carrier 100. The advantage of using tow bar 106 is that the user does not need to buy proprietary devices that can only be used with the load carrier 100. Furthermore, the user does not need to buy rear lightning or other options for the load carrier 100.

Fig. 7 illustrates another use of load carrier 100 according to an embodiment of the invention. In this case, rear lightning 702, 703 and a license plate holder 704 is fitted onto the plates 171 and 172 of the carrier frame 101. The load carrier further comprises a cargo box 701 fitted directly onto the load carrier frame 101. Alternatively, the rear lightning or license plate holder may be omitted, when the rear lightning or license plate of the vehicle 150 is not obstructed by the cargo box 701. In any way, as can be seen in Fig. 1, the carrier frame does not obstruct the lightning or license plate holder of the vehicle 150.

The load carrier 100 is thus adaptable in many ways. In its basic form it only comprises the frame 101, release lock 104 and hinges 102 and 103. Optionally, rear lightning 702, 703, license plate holder 704, tow bar 160 and cargo box 701 can then be added to this basic load carrier 100. By this flexible arrangement, the basis load carrier 100 can be made light and is adaptable to different uses. As it is light, it does not put heavy strains on the bodywork of the vehicle thereby increasing the useful load that can be carried. Furthermore, only one basic carrier needs to be produced which greatly reduces the manufacturing cost and thus retail price.

Although the present invention has been illustrated by reference to specific embodiments, it will be apparent to those skilled in the art that the invention is not limited to the details of the foregoing illustrative embodiments, and that the present invention may be embodied with various changes and modifications without departing from the scope thereof. The present embodiments are therefore to be considered in all respects as illustrative and not restrictive, the scope of the invention being indicated by the appended claims rather than by the foregoing description, and all changes which come within the meaning and range of equivalency of the claims are therefore intended to be embraced therein. In other words, it is contemplated to cover any and all modifications, variations or equivalents that fall within the scope of the basic underlying principles and whose essential attributes are claimed in this patent application. It will furthermore be understood by the reader of this patent application that the words "comprising" or "comprise" do not exclude other elements or steps, that the words "a" or "an" do not exclude a plurality.

## Claims

1. Load carrier (100) for installing on the rear of a vehicle (150) with a first (151) and second (152) rear door, each door being attached to the vehicle with at least a first lowest hinge (156, 158) and a second higher hinge (157, 159) at a respective first lower and second higher attachment point on the vehicle; and wherein the load carrier comprises:
- a carrier frame (101);
- a first (103) and second (102) hinge for rotatably attaching the carrier frame (101) to the first lower attachment point and second higher attachment point of the second door (152);
- a release lock (104) for releasably locking the carrier frame to the first lower attachment point of the first door;
**characterized in that** the load carrier is further configured (161, 162) for receiving a tow bar (160).

2. The load carrier (100) according to claim 1 further comprising rear light attachment means (171, 172) for attaching rear lightning (702, 703).

3. The load carrier (100) according to claim 1 or 2 further comprising the tow bar (160).

4. The load carrier (100) according to claim 3 further comprising rear lightning (702, 703) attached to the rear light attachment means (171, 172).

5. The load carrier (100) according to any one of the preceding claims wherein the carrier frame (101) is arranged such that, when the carrier is installed on the vehicle, the rear lights (153, 154) of the vehicle are not obstructed by the load carrier (100).

6. The load carrier (100) according to any one of the preceding claims wherein the first and second hinge (103, 102) and the release lock (104) are configured such that they can be installed on the vehicle without altering the body work of the vehicle.

7. The load carrier (100) according to any one of the preceding claims wherein the first and second hinge (103, 102) are arranged to be disassembled for removing the carrier frame from the vehicle.

8. The load carrier (100) according to any one of the preceding claims wherein the first and second hinges each comprise a first (401, 501) and second (402, 502) hinge leaf, a pin (409, 509) insertable through a knuckle of the first and second hinge leaf, and a safety pin (410, 510) for holding the pin; and wherein the hinges can be disassembled by removing the safety pin and pin.

9. The load carrier (100) according to any one of the preceding claims further comprising a gas spring (413) arranged to rotate the carrier frame to an opened position when installed on the vehicle (150).

10. The load carrier (100) according to claim 9 wherein the gas spring (413) is a dampened gas spring arranged to dampen the rotation of the carrier frame when the carrier frame is near the opened position.

11. The load carrier (100) according to any one of the preceding claims wherein the release lock (104) further comprises a first part (802) attachable to the first lower attachment point of the first door and a second part (801) attached to the carrier frame (101); and wherein second part (801) comprises one or more centring pins (810, 811) and the first part (802) comprises one or more respective holes (812, 813) for receiving the centring pins when closing the load carrier (100).

12. The load carrier (100) according to claim 11 further comprising a locking pin (820) for locking the release lock (104); and wherein the first and second part (801, 802) each comprise a hole (816, 817) for receiving the locking pin (820).

13. The load carrier (100) according to claim 11 or 12 further comprising a covering element (900) for inserting over the first part (802) when the load carrier (100) is not in use; the covering element being arranged such that it serves as a door stop.

## Patentansprüche

1. Lastenträger (100) zur Installation an das Heck eines Fahrzeugs (150) mit einer ersten (151) und einer zweiten (152) Hecktür, wobei jede Tür mit mindestens einem ersten untersten Scharnier (156, 158) und einem zweiten höheren Scharnier (157, 159) an einem jeweiligen ersten unteren und zweiten höheren Befestigungspunkt am Fahrzeug am Fahrzeug befestigt ist, und wobei der Lastenträger umfasst:
- einen Trägerrahmen (101);
- ein erstes (103) und zweites (102) Scharnier zum drehbaren Befestigen des Trägerrahmens (101) am ersten unteren Befestigungspunkt und am zweiten höheren Befestigungspunkt der zweiten Tür (152);
- eine Löseverriegelung (104) zum lösbaren Verriegeln des Trägerrahmens an den ersten unteren
Befestigungspunkt der ersten Tür;
**dadurch gekennzeichnet, dass** der Lastenträger ferner konfiguriert (161, 162) ist, um eine Zugstange (160) aufzunehmen.

2. Lastenträger (100) nach Anspruch 1, ferner umfassend Heckbeleuchtungsbefestigungsmittel (171, 172) zum Befestigen einer Heckbeleuchtung (702, 703).

3. Lastenträger (100) nach Anspruch 1 oder 2, ferner umfassend die Zugstange (160).

4. Lastenträger (100) nach Anspruch 3, ferner umfassend Heckbeleuchtung (702, 703), die an den Heckbeleuchtungsbefestigungsmitteln (171, 172) befestigt ist.

5. Lastenträger (100) nach einem der vorstehenden Ansprüche, wobei der Trägerrahmen (101) so angeordnet ist, dass, wenn der Träger am Fahrzeug installiert ist, die Heckleuchten (153, 154) des Fahrzeugs nicht durch den Lastenträger (100) behindert werden.

6. Lastenträger (100) nach einem der vorstehenden Ansprüche, wobei das erste und das zweite Scharnier (103, 102) und die Löseverriegelung (104) so konfiguriert sind, dass sie ohne Veränderung der Fahrzeugkarosserie am Fahrzeug installiert werden können.

7. Lastenträger (100) nach einem der vorstehenden Ansprüche, wobei das erste und zweite Scharnier (103, 102) angeordnet sind, um zum Entfernen des Trägerrahmens vom Fahrzeug demontiert zu werden.

8. Lastenträger (100) nach einem der vorstehenden Ansprüche, wobei das erste und zweite Scharnier jeweils ein erstes (401, 501) und zweites (402, 502) Scharnierblatt, einen durch ein Gelenk des ersten und zweiten Scharnierblatts einführbaren Stift (409, 509) und einen Sicherheitstift (410, 510) zum Halten des Stifts umfassen; und wobei die Scharniere durch Entfernen des Sicherheitsstifts und des Stifts demontiert werden können.

9. Lastenträger (100) nach einem der vorstehenden Ansprüche, ferner umfassend eine Gasfeder (413), die angeordnet ist, um den Trägerrahmen, wenn er am Fahrzeug (150) installiert ist, in die geöffnete Position zu drehen.

10. Lastenträger (100) nach Anspruch 9, wobei die Gasfeder (413) eine gedämpfte Gasfeder ist, die angeordnet ist, um die Drehung des Trägerrahmens zu dämpfen, wenn der Trägerrahmen nahe der geöffneten Position ist.

11. Lastenträger (100) nach einem der vorstehenden Ansprüche, wobei die Löseverriegelung (104) ferner einen ersten Teil (802), der am ersten unteren Befestigungspunkt der ersten Tür befestigt werden kann, und einen zweiten Teil (801), der am Trägerrahmen (101) befestigt werden kann, umfasst; und wobei der zweite Teil (801) einen oder mehrere Zentrierungsstifte (810, 811) umfasst und der erste Teil (802) ein oder mehrere jeweilige Löcher (812, 813) zum Aufnehmen der Zentrierungsstifte beim Schließen des Lastenträgers (100) umfasst.

12. Lastenträger (100) nach Anspruch 11, ferner umfassend einen Verriegelungsstift (820) zum Verriegeln der Löseverriegelung (104); und wobei der erste und zweite Teil (801, 802) jeweils ein Loch (816, 817) zum Aufnehmen des Verriegelungsstifts (820) umfassen.

13. Lastenträger (100) nach Anspruch 11 oder 12, ferner umfassend ein Abdeckungselement (900) zum Einführen über das erste Teil (802), wenn der Lastenträger
(100) nicht in Gebrauch ist; wobei das Abdeckungselement so angeordnet ist, dass es als Türstopper fungiert.

## Revendications

1. Support de charge (100) destiné à être installé à l'arrière d'un véhicule (150) avec une première (151) et une seconde (152) porte arrière, chaque porte étant fixée au véhicule avec au moins une première charnière (156, 158) inférieure et une seconde charnière (157, 159) supérieure au niveau d'un premier point de fixation inférieur et d'un second point de fixation supérieur respectifs sur le véhicule ; et ledit support de charge comprenant :
- un cadre de support (101) ;
- une première (103) et une seconde (102) charnière permettant la fixation rotative du cadre de support (101) au premier point de fixation inférieur et au second point de fixation supérieur de la seconde porte (152) ;
- un verrou de libération (104) permettant de verrouiller de manière libérable le cadre de support au premier point de fixation inférieur de la première porte ;
**caractérisé en ce que** le support de charge est en outre conçu (161, 162) pour recevoir une barre de remorquage (160).

2. Support de charge (100) selon la revendication 1, comprenant en outre un moyen de fixation de feu arrière (171, 172) permettant la fixation d'un feu arrière (702, 703).

3. Support de charge (100) selon la revendication 1 ou 2, comprenant en outre la barre de remorquage (160).

4. Support de charge (100) selon la revendication 3, comprenant en outre un feu arrière (702, 703) fixé au moyen de fixation de feu arrière (171, 172).

5. Support de charge (100) selon l'une quelconque des revendications précédentes, ledit cadre de support (101) étant agencé de sorte que, lorsque le support est installé sur le véhicule, les feux arrières (153, 154) du véhicule ne sont pas obstrués par le support de charge (100).

6. Support de charge (100) selon l'une quelconque des revendications précédentes, lesdites première et seconde charnières (103, 102) et ledit verrou de libération (104) étant conçus de sorte qu'ils puissent être installés sur le véhicule sans modifier la carrosserie du véhicule.

7. Support de charge (100) selon l'une quelconque des revendications précédentes, lesdites première et seconde charnières (103, 102) étant agencées pour être désassemblées en vue du retrait du cadre de support du véhicule.

8. Support de charge (100) selon l'une quelconque des revendications précédentes, lesdites première et seconde charnières comprenant chacune un premier (401, 501) et un second (402, 502) battant de charnière, une broche (409, 509) pouvant être insérée à travers un charnon des première et deuxième battants de charnière, et une goupille de sécurité (410, 510) permettant de maintenir la broche ; et lesdites charnières pouvant être désassemblées en retirant la goupille de sécurité et la broche.

9. Support de charge (100) selon l'une quelconque des revendications précédentes, comprenant en outre un ressort à gaz (413) agencé pour faire tourner le cadre de support jusqu'à une position ouverte lorsqu'il est installé sur le véhicule (150).

10. Support de charge (100) selon la revendication 9, ledit ressort à gaz (413) étant un ressort à gaz amorti agencé pour amortir la rotation du cadre de support lorsque le cadre de support est proche de la position ouverte.

11. Support de charge (100) selon l'une quelconque des revendications précédentes, ledit verrou de libération (104) comprenant en outre une première partie (802) pouvant être fixée au premier point de fixation inférieur de la première porte et une seconde partie (801) fixée au cadre de support (101) ; et ladite seconde partie (801) comprenant une ou plusieurs broches de centrage (810, 811) et ladite première partie (802) comprenant un ou plusieurs trous respectifs (812, 813) destinés à recevoir les broches de centrage lors de la fermeture du support de charge (100).

12. Support de charge (100) selon la revendication 11, comprenant en outre une broche de verrouillage (820) destinée à verrouiller le verrou de libération (104) ; et lesdites première et seconde parties (801, 802) comprenant chacune un trou (816, 817) destiné à recevoir la goupille de verrouillage (820).

13. Support de charge (100) selon la revendication 11 ou 12, comprenant en outre un élément de couverture (900) destiné à être inséré sur la première partie (802)
lorsque le support de charge (100) n'est pas utilisé ; ledit élément de couverture étant agencé de sorte qu'il serve de butée de porte.
